(19) Europäisches Patentamt
European Patent Office
Office européen des brevets

(11) Publication number : **0 477 151 A2**

(12) **EUROPEAN PATENT APPLICATION**

(21) Application number : 91830386.8

(22) Date of filing : 20.09.91

(51) Int. CI.⁵ : **B23K 31/02, B23K 9/04**

(30) Priority : **20.09.90 IT 949490**

(43) Date of publication of application :
**25.03.92 Bulletin 92/13**

(84) Designated Contracting States :
**AT BE CH DE DK ES FR GB GR LI LU NL SE**

(71) Applicant : **PROFIL PLASTIC di Raffaelli Franco e Miniati Luana S.n.c.
Via Lucia n. 7
I-55016 Porcari, Lucca (IT)**

(72) Inventor : **Raffaelli, Franco
Via Ungaretti 225
Lucca (IT)**

(74) Representative : **Mannucci, Gianfranco,
Dott.-Ing. et al
Ufficio Tecnico Ing. A. Mannucci Via della
Scala 4
I-50123 Firenze (IT)**

(54) **Method and device for the application of sealing strips on casing frames and similar.**

(57) The method for assembling and welding sealing or jointing strips or similar obtained from lengths of strip on a supporting frame, is charaterized by the fact : that at least one length of the said strip is cut according to planes forming joint surfaces for butt welding ; that this or these lengths are assembled on respective frames with the joint surfaces brought close to each other ; and that said surfaces are welded together on the frame after the assembly of the length or lengths of strip. A particular welding device is foreseen (20) with a blade resistance (26) shaped in such a way as to be able to weld together two sealing lengths (11) already assembled on a section (3) of the frame.

FIG.5

EP 0 477 151 A2

The invention refers to a method for applying jointing or sealing strips by welding on casing frames or similar, and a device for carrying out said method.

The casings, for example of doors, windows or similar, present a rectangular frame fitted with one or more sealing or jointing strips. Assembly of the sealing, this is cut into lengths corresponding to the length of the frame's sides, and the various lenghts are cut at 45°, that is a quarter round, and butt welded using special machines. The sealing thus obtained, which has a shape corresponding to the frame on which it must be assembled, is inserted in the frame's stop slots. This method is particularly laborious in that the completion operation of the sealing's perimeter must be carried out before its assembly on the casing, which requires absolute precision in the cutting of the sealing lengths to be welded and the subsequent application to the casing proves to be extremely difficult. Moreover, for the welding of the sealing lengths highly expensive equipment is necessary.

The subject of the invention is a method for assembling jointing or sealing strips by welding onto casing frames or similar, which proves to be more rapid and easier than the traditional method and that, moreover, does not require expensive machinery.

A further subject of the invention is a device for carrying out this method.

In substance, according to the invention the method is characterized by the fact: that at least one lengths of a sealing or jointing strip is cut according to planes forming joint surfaces for a butt welding; that said lengths or length are assembled on corresponding portions of the respective frames with the joint surfaces brought near to each other; and that the said surfaces are welded together after assembly of the lengths or lenght on the frame.

With this method the lengths of sealings can be assembled each one separate from the others on the support frame (e.g. formed by section irons) with the joint surfaces brought near to each other, or they can be assembled onto the metal lengths forming the wing or the casing's frame before the assembling of these lenghts on the finished casing. At the moment of assembling the metal lengths the joint surfaces of the sealings will be brought near to each other ready for welding. With the subsequent heating of the contact surfaces, for example with a laminar shaped form electrical resistance, the welding of the lengths already assembled is carried out. Assembly is very easy and does not require expensive welding machinery. Normally a number of lengths are assembled, normally four lengths, on a frame which will normally have a rectangular shape. Nevertheless, it should not be excluded that the jointings can be obtained with just one length, the ends of which are welded to form an annular jointing strip, for example when the frame does not present angles, but connection curvatures.

Further advantageous features of the method according to the invention are pointed out in the following description and the enclosed claims.

The invention also concerns a device for welding length of sealing or jointing strips or similar for the realization of a seal on a support frame, especially according to the method described above, characterized by a blade conductor suitable for inserting between two adjacent joint surfaces of lengths of sealing strips already assembled on the frame. The blade conductor can advantageously be part of a welding head of a portable electrical welder, of the type comprising two bar conductors connected to each other at the front by the blade and whose free ends can be inserted into equivalent contacts of the portable welder. In this way an extremely simple and economical device is realized, besides being easily handled and versatile, which enables the sealing according to the innovative method presented by this invention to be used. Further advantageous forms of realization of the device according to the invention are pointed out in the following description and enclosed claims.

The invention also concerns a portable electrical welder, of the type including a handgrip and a welding head, characterized in that the welding head includes a device of the type mentioned above.

The invention will be better understood following the description and drawings, which show a practical non limiting exemplification of the invention itself.

In the drawing:

Fig.1 shows a section according to I-I of Fig.2 of a portion of a casing frame;

Fig.2 shows a section according to II-II of Fig.1;

Fig.3 shows an embodiment of the welding device according to the invention;

Fig.4 shows an enlarged view of the welding area of the length of sealing strips during welding; and

Fig.5 shows the section of a frame with the welding device in a working position.

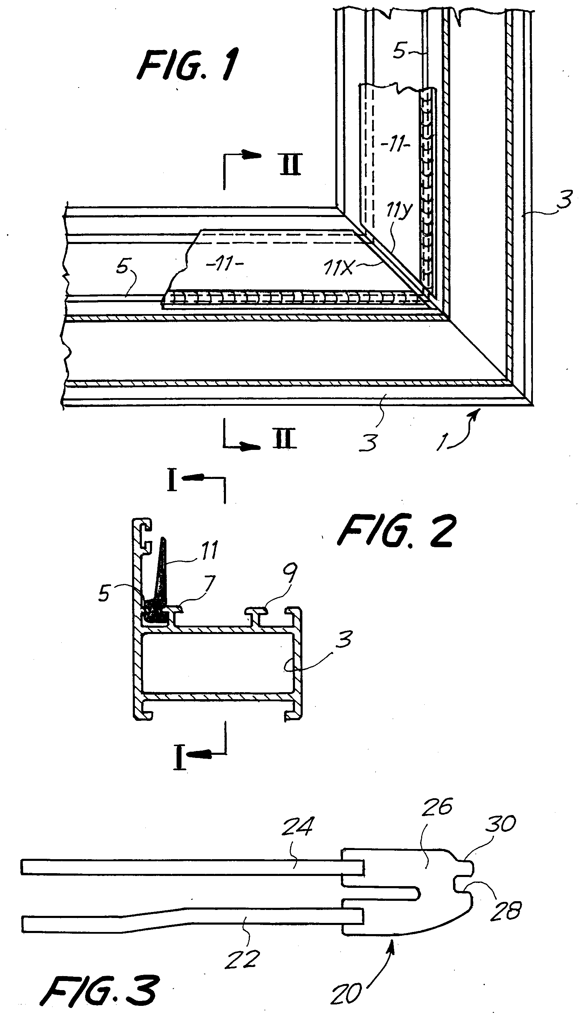

Shown in Figs. 1 and 2 is a portion 1 of a casing frame realized with portions of 3 joined together with connection angles at 45°. The cross-section of the section irons 3 presents profiles 5, 7, 9 for anchoring suitably shaped sealing strips. Shown in the enclosed drawings, only as an example, is a lip seal 11 held between profiles 5 and 7. Each length of the sealing is bevelled at 45° in 11X and 11Y respectively, to be joined together by welding in correspondence with a corner of frame 1, to the adjoining lenght.

According to the technique used up to now, the sealing lengths 11 were welded before being anchored to frame 1. Vice-versa according to the method of this invention the seal lengths 11 to be assembled on frame 1 are inserted individually into the corresponding parts of the frame and welded after they have been inserted into the relevant profiles 5, 7, 9.

To this end, according to the invention an electrical welding head is forseen shown from a side-view in Fig. 3. The welding head 20 can be used with an ordinary portable electrical welder (not shown). The welding head 20 presents two conductor bars 22, 24 of a standardized type which can be inserted into the special seats of the welder. The two conductor bars 22,24 are joined together by a front blade 26. The blade 26 forms a resistor which presents electrical characteristics suitable for developing a thermal power sufficient for melting the material of the sealing strips therefore enabling welding to take place. Moreover, in the front area the blade 26 is grooved at 28 and is bevelled at 30 which enables the blade to be brought into close to the frame in such a way as to carry out a frontal welding of the lenghts 11, as the following describes.

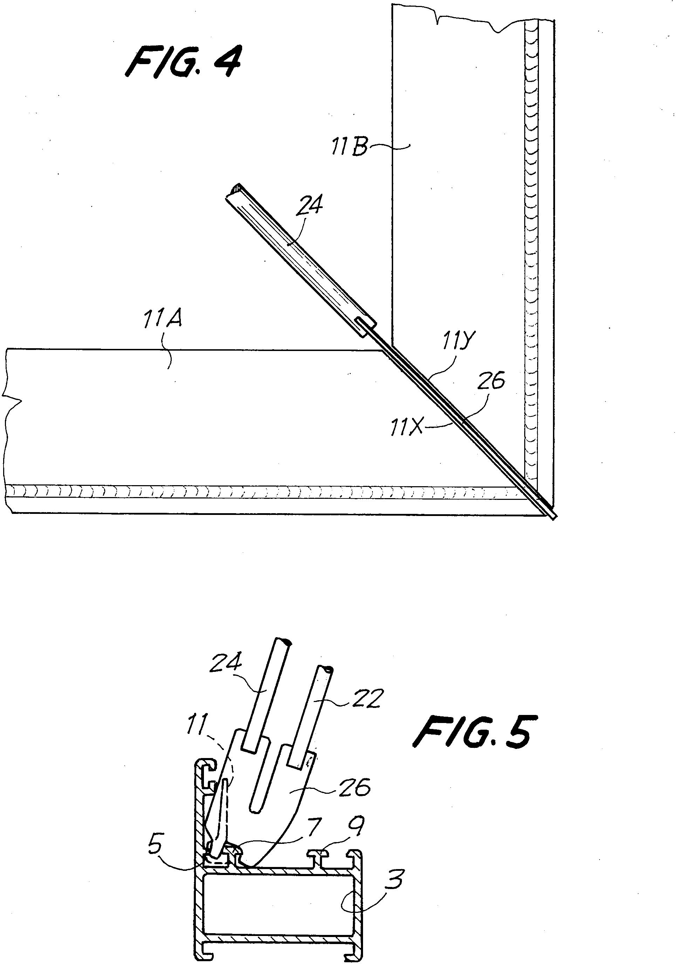

In order to carry out the welding of two consecutive sealing lengths 11A, 11B (Fig.4), these are inserted into the corresponding profiles of the respective frame sections 3 and the ends 11X, 11Y thereof are placed in contact to each other. In Fig.4 only sealing lengths strips 11A, 11B are shown whilst frame 1 has been omitted, in order to make the drawing clearer. Moreover, in this figure, and also in Fig.1, the two lengths 11A, 11B are shown slightly spaced apart for greater clearness, but in reality they are in contact to allow for correct welding. Blade 26 of the welding head 20 is inserted between the two lengths 11A, 11B abutted along the beadings 11X, 11Y for a quarter round which, on heating up due to the Joule effect, melts a part of the material of both of the length ends so that, subsequently on removing the welding head, the partially melted surfaces of the two bevelled ends come into contact and weld together.

As shown in Fig.5, the configuration of the blade 26 is such that the blade itself can enter into contact with the whole surface of bevelled ends 11X, 11Y of the lengths 11A, 11B of sealing strips, without interfering with the profiles 5, 7, 9 of the lengths of section 3. Groove 28 and bevel 30 are formed expressly to avoid interference with the frame itself. It is evident, therefore, that blade 26 can take on different shapes according to the different sections onto which the lengths of sealing strips must be mounted. A set of different welding heads 20 can also be envisaged, each one suitable for a type or for a range of frames.

It is understood that the drawing shows only one example given as a practical demonstration of the invention, since this invention can vary in shape and disposition without however changing the principle of the function behind the invention.

**Claims**

1. Method for assembling and welding sealing or jointing strips or similar obtained from lengths of strips on a supporting frame, characterized in that: at least one length of said strip is cut according to planes forming joint surfaces for butt welding; this or these lengths are assembled on the respective frame with the joint surfaces close to one another; and said surfaces are welded together after the assembly of the length or lenghts of strip on the frame.

2. Method as in claim 1, characterized in that the welding is realized inserting a heating blade between the two joint surfaces which have been brought near to each other.

3. Method as in claim 1 or 2, characterized in that the joint surfaces are cut at 45° with respect to the longitudinal axis of the length.

4. A device for the welding of sealing or jointing strip lengths or similar for the realization of a sealing on a supporting frame, especially according to the method of one or more of claims 1 to 3, characterized by a blade conductor which can be inserted between the two consecutive joint surfaces of at least one length already assembled on the relative frame.

5. A device as in claim 4, characterized in that said blade conductor is electrically connected to two bars which can be inserted into a portable welder.

6. A device as in claims 5 or 6, characterized in that said blade conductor presents at least one bevel and/or groove to enable the blade to be brought near the frame.

7. A portable electrical welder including a handgrip and a welding head, characterized in that said welding head includes a device as in one or more of the claims 4 to 6.

## FIG. 1

## FIG. 2

## FIG. 3

FIG. 4

FIG. 5